# EUROPEAN PATENT SPECIFICATION

(11) **EP 1 144 461 B1**
(45) Date of publication and mention of the grant of the patent: **31.03.2004**
(21) Application number: 00904870.3
(22) Date of filing: 06.01.2000
(51) Int. Cl.: C08F 2/20

(54) **AQUEOUS PEROXIDE EMULSIONS**
WÄSSRIGE PEROXIDEMULSION
EMULSIONS AQUEUSES DE PEROXYDE

(30) Priority: 12.01.1999 EP 99200066
(43) Date of publication of application: 17.10.2001
(73) Proprietor: Akzo Nobel N.V., 6824 BM Arnhem (NL)
(72) Inventor: WESTMIJZE, Hans, NL-7437 BB Bathmen (NL); O, Boen, Ho, NL-3514 CW Utrecht (NL)
(74) Representative: Schalkwijk, Pieter Cornelis
(86) International application number: PCT/EP2000/000003
(87) International publication number: WO 2000/042078

(56) References cited:
- EP-A- 0 492 712
- EP-A- 0 517 290
- WO-A-98/18835
- GB-A- 2 068 009
- US-A- 5 574 200

## Description

This invention relates to aqueous emulsions of peroxides, optionally containing an anti-freeze and/or further additives, which contain a specific emulsifier system comprising a copolymer of an α,β-unsaturated dicarboxylic acid and a C₈₋₂₄ α-olefin the acid groups of which are esterified with an ethoxylated alcohol having a degree of ethoxylation of 1-45.

Such peroxide emulsions are known from, for instance, EP-A-0 492 712. In this patent application it is disclosed in Examples 14-18 how the copolymer of an α,β-unsaturated dicarboxylic acid and a C₈₋₂₄ α-olefin the acid groups of which are esterified with an ethoxylated alcohol having a degree of ethoxylation of 1-45, hereinafter called esterified copolymer, is used to make aqueous peroxide emulsions with a small droplet size and a relatively low viscosity. With one exception where no anti-freeze was used at all, the emulsions contain methanol as an anti-freeze. The patent application suggests that surfactants as listed in EP-A-0 106 627 may be employed as a standard additive. However, EP-A-0 106 627 discloses a tremendously wide range of surfactants. For instance, they include anionic and cationic as well as nonionic surfactants. Furthermore, some are sugar based, some are polymeric, some are ethoxylated, etcetera. Even the preferred surfactants cover a wide range of products.

As stated above, the prior art emulsions show a small droplet size and a relatively low viscosity. However, following these references we were not able to develop peroxide emulsions that were completely satisfactory. More particularly, only methanol could be used as an anti-freeze, while also various physical properties could not be balanced properly, sometimes even resulting in unsafe formulations. Therefore, there is a need for new peroxide emulsions that show more balanced physical properties and are more tolerant in respect of the anti-freeze agent that can be used. Accordingly, an aqueous peroxide emulsion with the following properties is desired:
- low viscosity, preferably lower than 400 mPa.s,
- small peroxide droplet size, preferably the d50 is less than 2 µm,
- narrow droplet size distribution, preferably the d99 is less than 9 µm,
- a stable droplet size distribution over time, preferably for six months,
- no phase separation during storage,
- no formation of hazardous layers upon heating, and
- optionally containing anti-freeze agents, being methanol or other anti-freeze agents.

The emulsions according to the invention fulfill most, if not all, of these requirements. They are characterized in that the emulsifier system further comprises an ethoxylated fatty alcohol with an HLB value greater than 16.

It is noted that ethoxylated fatty alcohols have been used to produce aqueous peroxide suspensions, as is disclosed, for instance, in EP-A-0 517 290. However, the emulsifier systems as described in this patent application for peroxide suspensions are not suitable for the production of acceptable emulsions of peroxides. More specifically, they result in emulsions that are either too viscous or unsafe.

Furthermore, it is noted that the aqueous peroxide emulsions as described herein are limited to emulsions that remain liquid at the recommended storage temperature of the peroxide being emulsified. For peroxides that need refrigerated storage, this means that the emulsions according to the invention are liquids at temperatures as low as -20°C.

The peroxides that can be formulated according to the invention can be of any conventional type. However, the emulsions are preferably those of peroxyesters, peroxydicarbonates, peroxycarbonates, diacyl peroxides, peracids or combinations thereof. The invention was proven to be pre-eminently suitable for emulsions of peresters and peroxydicarbonates. Examples of suitable peroxides include: diisobutanoyl peroxide, 2,2-bis(2,2-dimethylpropanoylperoxy)-4-methyl pentane, α-cumyl peroxyneodecanoate, 4-hydroxy-2-methylpentyl peroxyneodecanoate, 2-(2,2-dimethylpropanoylperoxy)-2-(2-ethylhexanoylperoxy)-4-methyl pentane, 2,4,4-trimethylpentyl-2 peroxyneodecanoate, tert-amyl peroxyneodecanoate, bis(2-ethylhexyl) peroxydicarbonate, tert-butyl peroxyneodecanoate, dibutyl peroxydicarbonate, di-sec-butyl peroxydicarbonate, diisopropyl peroxydicarbonate, 4-hydroxy-2-methylpentyl peroxypivalate, tert-amyl peroxypivalate, tert-butyl peroxypivalate, 2,2-bis(2-ethylhexanoylperoxy)-4-methyl pentane, bis(3,5,5-trimethylhexanoyl) peroxide, 2,5-bis(2-ethylhexanoylperoxy)-2,5-dimethylhexane, isopropyl peracid, 4-hydroxy-2-methylpentyl peroxy-2-ethylhexanoate, tert-amyl peroxy-2-ethylhexanoate, tert-butyl peroxy-2-ethylhexanoate, tert-butyl peroxydiethylacetate, tert-butyl peroxyisobutanoate, tert-butyl peroxy-3,5,5-trimethylhexanoate, 4-hydroxy-2-methylpentylperoxy isopropyl carbonate, tert-butylperoxy isopropyl carbonate, tert-amylperoxy isopropyl carbonate, tert-butylperoxy 2-ethylhexyl carbonate, 4-hydroxy-2-methylpentylperoxy 2-ethylhexyl carbonate, tert-amylperoxy 2-ethylhexyl carbonate, 4-hydroxy-2-methylpentyl peroxyacetate, tert-butyl peroxyacetate, tert-amyl peroxyacetate, tert-butyl peroxybenzoate, tert-amyl peroxybenzoate, 4-hydroxy-2-methylpentyl peroxybenzoate, cyclic methyl ethyl ketone peroxide (e.g. Trigonox® 301 ex Akzo Nobel), cyclic methyl isobutyl ketone peroxide, cyclic methyl isopropyl ketone peroxide, 2,5-dimethyl-2,5-di(tert-butylperoxy) hexane, and di-tert-butyl peroxide. The amount of organic peroxide in the aqueous emulsion is between 15 and 70% by weight, based on the weight of the emulsion. More preferably, there is 40-65% by weight of peroxide and most preferably, 50-65% by weight of peroxide is present. At concentrations of less than 15% by weight the cost of transportation of the peroxide becomes very high and at concentrations above 70% by weight the products cannot be easily handled and often become intrinsically unsafe. However, emulsions containing 15-40% by weight of peroxide may be necessary if the peroxide cannot be handled in a concentrated form. More specifically, when a peroxide can only be produced as a dilute solution in a phlegmatizer, which is often the case for highly reactive peroxides with a one hour half-life temperature below 60°C when measured in chlorobenzene, then only such a dilution can be converted to an emulsion. Because the amount of organic material (to which the phlegmatizer belongs) that can be emulsified is limited to, typically, 70% by weight or less, the amount of peroxide in the emulsion will be reduced accordingly.

The esterified copolymer is a copolymer of at least one α,β-unsaturated dicarboxylic acid ester and at least one C₈₋₂₄ α-olefin, said dicarboxylic acid component of said copolymer being esterified by at least one ethoxylated alcohol having a degree of ethoxylation of 1-45. The esterified copolymers generally have a molar ratio of α-olefin to α,β-unsaturated dicarboxylic acid ester of 0.5-4. Such copolymers, and the methods for their manufacture, are described in detail in U.S. patent 4,931,197, which description is hereby incorporated by reference. The copolymers of α-olefin and dicarboxylic acid ester may be esterified by at least one ethoxylated alcohol having a degree of ethoxylation of 1-45. Such ethoxylated alcohols may also contain propoxy groups. If in addition to the ethoxy groups in the ethoxylated alcohol propoxy groups are present, it is preferred that the degree of propoxylation be 1-10,. An example of a suitable esterified copolymer is Dapral® GE202 as obtainable from Akzo Nobel. The esterified copolymer is typically used in an amount of from 0.05 to 20% by weight, based on the amount of peroxide. Preferably, it is used in an amount of from 0.10 to 15% by weight, while an amount of from 0.20 to 10% by weight, all based on the amount of emulsified peroxide, is most preferred.

The ethoxylated fatty alcohol with an HLB value greater than 16 which forms the other essential part of the emulsifier system according to the invention can be selected from the conventional ethoxylated fatty alcohols with said HLB value. Said HLB value is the HLB-value as generally accepted in the industry, being the hydrophilic-lipophilic balance as worked out by the Atlas Powder Company and published in "The Atlas HLB-System, a time saving guide to emulsifier selection" in 1963. Examples of suitable compounds include ethoxylated lauryl alcohol, e.g., with a degree of ethoxylation of 23, having an HLB-value of 16.9, and obtainable from ICI as Brij® 35, ethoxylated dodecyl alcohol, such as Remcopal® 20, ethoxylated myristyl alcohol, ethoxylated cetyl alcohol, ethoxylated oleyl alcohol, ethoxylated mixtures of alcohols, such as Ethylan® CO35 which is the ethoxylated product from a mixture of palmitic and oleyl alcohol, ethoxylated alcohols derived from coconut oil, palmitic acid, and/or tallow, and ethoxylated stearyl alcohol, e.g., with a degree of ethoxylation of 80 with an HLB-value of 18.5, and obtainable from Akzo Nobel as Berol® 08. Preferably, the ethoxylated fatty alcohol has an HLB-value greater than 16.5, more preferably greater than 17.0. The ethoxylated fatty alcohol is typically used in an amount of 0.02 to 15 % by weight, based on the amount of emulsified peroxide. More preferably, it is used in an amount of 0.05 to 10% by weight, most preferably 0.1 to 7.5% by weight, all based on the weight of the emulsified peroxide. Although the amount of ethoxylated fatty alcohol can be chosen independently from the amount of esterified copolymer used, it is preferred to use a total of both components in an amount of at least 0.5% by weight, more preferably 0.75% by weight, based on the weight of the emulsified peroxide. The HLB of the ethoxylated fatty alcohol in practice will be below 30. Preferably it is below 25 and even more preferably below 22.

Although it is preferred that the emulsifier system as used in the emulsions according to the invention consists essentially of the esterified copolymer and the ethoxylated fatty alcohol, it is possible to also use further nonionic surfactants in the formulation. More particularly, one may opt to use some further nonionic surfactant to improve, for instance, the performance of the peroxide emulsion in the process wherein it is used. However, if so, it is preferred to use a combination of surfactants where the combined HLB-value, on a weight average basis, is greater than 16, preferably greater than 16.5, and most preferably greater than 17.0.

Especially when peroxides are used that require refrigerated storage, see for instance in the brochure "Initiators for high polymers" published by Akzo Nobel with code 10737, which peroxides include diisobutanoyl peroxide, α-cumyl peroxyneodecanoate, 2,4,4-trimethylpentyl-2 peroxyneodecanoate, tert-amyl peroxyneodecanoate, bis(2-ethylhexyl) peroxydicarbonate, tert-butyl peroxyneodecanoate, dibutyl peroxydicarbonate, di-sec-butyl peroxydicarbonate, diisopropyl peroxydicarbonate, tert-amyl peroxypivalate, tert-butyl peroxypivalate, bis(3,5,5-trimethylhexanoyl) peroxide, 2,5-bis(2-ethylhexanoylperoxy)-2,5-dimethylhexane, tert-amyl peroxy-2-ethylhexanoate, tert-butyl peroxy-2-ethylhexanoate, tert-butyl peroxydiethylacetate, and tert-butyl peroxyisobutanoate, it is preferred to use an anti-freeze agent in the aqueous peroxide emulsion. Depending on the use of the peroxide emulsion, it may be preferred to use an anti-freeze agent other than methanol. Conventional peroxide emulsions often contain methanol, since this agent typically does not influence the viscosity of the final emulsion too much. It was observed that the emulsions according to the invention are far more tolerant as to the type of anti-freeze agent that is used and the effect thereof on the final viscosity. The amount and type of anti-freeze to be used depends on the nature and amount of peroxide that is being formulated as well as on the type of anti-freeze, or mixture of anti-freezes, that is used. However, the inventors found it convenient to adjust the amount of anti-freeze agent(s) such that the mixture of just the anti-freeze and water that is used to form the emulsion shows a freezing point below the storage temperature necessary for handling the peroxide. A skilled person will have no difficulties in balancing the ratio of water to anti-freeze agent such that a certain desired freezing temperature is reached. Typically, the amount of anti-freeze agent used in the emulsion will be lower than the amount of water. The anti-freeze agents include, but are not limited to, salts, alcohols, including glycols, and other agents disrupting the hydrogen bridging structure of freezing water. Preferably, use is made of methanol, ethanol, isopropanol, ethylene glycol, propylene glycol, glycerol, and/or mixtures thereof, since it is known that such compounds will have hardly any effect on the polymerization process in which the emulsions are used later on.

The viscosity of the final emulsion preferably is such that it is easy to pour and/or pump. Typically, this means that the viscosity when measured according to Erichsen using an Erichsen model 332 viscometer with a shear rate of about 200 s⁻¹, at a temperature of 0°C, is below 300 mPa.s. More preferably, the Erichsen viscosity of the emulsion is between 10 and 200 mPa.s at 0°C. Most preferably, the viscosity of the emulsion is between 20 and 100 mPa.s. At this viscosity it is preferred that the d50 of the peroxide droplet distribution, when measured with a Malvem® Easy Sizer, is from 0.1 to 2.0 µm while the d99 is from 0.5 to 9.0 µm, preferably from 0.5 to 5.0 µm. Also, the preferred emulsions retain these properties during storage. Such features are obtainable by using the emulsifier system according to the invention and using a high-shear mixer to finely divide the peroxide in the aqueous phase. Such high-shear mixtures can be any of the conventional ones and include ultrasonic mixers, homogenizers, perl-mills, high-speed rotor-stator mixers, e.g. Ultra-Turrax®, Dispax®, and the like. The final droplet size of the peroxide is influenced, *inter alia,* by the amount and composition of the emulsifier system that is used and the stirring energy that is used. However, with the information as presented herein, the skilled person will have no difficulty producing the preferred peroxide emulsions.

In order for the peroxide emulsions to be safe, it is essential that they do not show separation into one or more hazardous layers upon heating. Preferably, the peroxide in the emulsion decomposes gradually and in a controlled fashion. Typically, the heat of evaporation of the water of the emulsion and the volatile decomposition products that are formed suffice to remove the heat of decomposition.

For ease of reference; a peroxide emulsion is considered to be unsafe when upon heating sample of the emulsion, to a temperature 30°C higher than the self-accelerating decomposition temperature (SADT) of the most concentrated commercially acceptable dilution of the peroxide in isododecane in a 25 kg container (see, for instance, the brochure of Akzo Nobel titled "Initiators for high polymers" with code 10737 as available from Akzo Nobel Chemicals), a layer is formed with an active oxygen content of more than 1% by weight. In order to minimize safety-risks, such a test is to be performed with appropriate shielding of operators. In our laboratories we conducted this test using a thermostatted vessel of 200 ml, with a diameter of 3.2 cm, and containing about 190 ml of the emulsion to be evaluated.

Further, other additives as typically used when making emulsions of peroxides may be incorporated into the emulsion. Such additives include pH-adjusting agents such as phosphate buffers, sequestering agents, and, if desired, biocides, e.g. fungicides, etc. The concentration of these additives will depend on the desired effect and the other ingredients in the suspension.

The peroxide emulsions can be used in various polymerization reactions, including the curing of unsaturated polyester resins, and polymer modification reactions, including degradation, cross-linking, and grafting reactions. They are, however, pre-eminently suited for use in a polymerization process as (one of) the polymerization initiator(s) in the polymerization of vinyl chloride alone or in admixture with up to 40% by weight of one or more ethylenically unsaturated monomers copolymerizable therewith, oligomers and (co)polymers of the aforementioned monomers, and mixtures of two or more of these monomers, oligomers, and polymers. The use of the emulsions in such processes is detailed below.

The preferred polymerizable monomers for the present polymerization process include vinyl halides, particularly vinyl chloride, and ethylenically unsaturated monomers having at least one terminal unsaturated group. Examples of such ethylenically unsaturated monomers include esters of acrylic acid, such as methyl acrylate, ethyl acrylate, butyl acrylate, octyl acrylate, cyanoethyl acrylate, and the like, esters of methacrylic acid, such as methyl methacrylate, butyl methacrylate, and the like, styrene and styrene derivatives including α-methylstyrene, vinyl toluene, chlorostyrene, and the like, acrylonitrile, ethyl vinyl benzene, vinyl acetate, vinyl naphthalene, etc., and di-olefins including, but not limited to, butadiene, isoprene, chloroprene, and the like, and other ethylenically unsaturated monomers known to those of ordinary skill in the art.

In addition, oligomers and polymers made from one or more of the above-identified monomers may also be reacted with other monomers, polymers or oligomers in the present polymerization process. Of course, mixtures of two or more of the polymerizable materials can be used. In all cases there will be at least 60% of vinyl chloride monomer, oligomer or polymer in the polymerizable mixture.

Generally, a polymerizable composition comprises 0.01-6.0% by weight of one or more peroxides, based on the monomers, as an initiator and when vinyl chloride is polymerized alone, preferably there will be 0.01-0.5% by weight of the peroxide, based on the monomer. If one or more of the peroxides are in the form of an emulsion according to the invention, the amount of the emulsion is to be chosen such that the indicated amount of pure peroxide is supplied. In the case of use as a chain transfer agent, e.g. when a peracid is employed, typically a concentration of between 0.01 and 10.0% by weight of pure chain transfer agent is used, based on the polymerizable materials. Preferably, from 0.05 to 1 % by weight of these chain transfer agents is used.
A significant advantage of the present process for the polymerization of vinyl chloride is that the use of the emulsions of the present invention leads to greater flexibility in the polymerization process itself. More particularly, in conventional vinyl chloride polymerization processes the peroxide composition must be added to the monomer before the mixture is brought to the polymerization temperature in order to avoid adverse effects, such as increased fish-eye levels, on the properties of the resultant polymer. However, in the process of the present invention, the polymerization initiator emulsion may be added to the vinyl chloride monomer after it is heated to the polymerization temperature or may even be dosed stepwise or gradually during the polymerization reaction. These features provide greater flexibility in the polymerization process as well as a means of gaining better control over the process and the products of the process.

The polymerization process of the present invention typically is a suspension polymerization process in which an aqueous dispersion of vinyl chloride monomer and the polymerization initiator are heated to cause polymerization of the monomer as a result of free radical decomposition of the polymerization initiator. The polymerization conditions employed are the conventional conditions for vinyl chloride monomer polymerization. For a detailed description of the process conditions, as well as the types of monomers which can be polymerized by this method, reference may be made to US 3,825,509, which is incorporated herewith by reference.

The present process, however, may differ slightly from that of US 3,825,509 in that it is not necessary to add the ingredients to the polymerization reactor in the order of water, dispersant, polymerization initiator, and, finally, monomer. While this conventional methodology is within the scope of the present invention, the present invention also encompasses reactions where the water, the dispersing agent, and the monomers are added to the reactor and heated to the polymerization temperature prior to the introduction of the polymerization initiator. In such reactions the polymerization initiator is added all at once, gradually or stepwise during the polymerization process.

Furthermore, it was proven that the peroxide emulsions according to the invention were useful in the suspension polymerization of predominantly styrene, as well as in the modification of polypropylene (PP). In respect of the latter use, it will depend on the type of peroxide emulsion and the modification process whether degradation or cross-linking reactions of PP will dominate.

In a final aspect, the present invention also relates to vinyl chloride-containing polymers produced by the process of the present invention. These polymers exhibit different properties from other vinyl chloride-containing polymers, including better electrical properties, lower fish- eye levels, and, in some instances, improved polymer morphology, such as porosity.

The invention is further illustrated by the following examples.

### Examples 1 and 2 and Comparative Examples A and B

In Examples 1 and A an emulsion is produced containing:
- 60.0% by weight (%w/w) of bis(2-ethylhexyl) peroxydicarbonate,
- 2.0%w/w of Dapral GE 202,
- optionally Berol 08 (see table), and
- the balance being a mixture of water/methanol with a freezing point of -20°C.

In Examples 2 and B an emulsion is produced containing:
- 50.0%w/w of 2,4,4-trimethylpentyl-2 peroxyneodecanoate,
- 0.1 or 0.4%w/w of Dapral GE 202 (see table),
- optionally Berol 08 (see table), and
- the balance being a mixture of water/methanol with a freezing point of -20°C.
All indicated amounts are based on the weight of the final emulsion. A "+" under the heading "safety" means that the emulsion did not show phase separation when kept for 8 hours at a temperature of 30°C above the SADT, while a "-" means that phase separation was observed and that consequently, such emulsions are unsafe.

| Example | 1 | A | 2 | B |
|---|---|---|---|---|
| Dapral GE 202 (%w/w) | 2 | 2 | 0.1 | 0.4 |
| Berol 08 (%w/w) | 0.5 | 0 | 0.3 | 0 |
| Viscosity (mPa.s) | 247 | 75 | 75 | 70 |
| d50 (%w/w | 1.4 | 2.1 | 1.7 | 3.1 |
| d99 (%w/w) | 2.6 | 4.4 | 3.3 | 7.0 |
| Safety | + | - | + | - |

These results show that emulsions of at least two different types of peroxides can be produced, that it is essential to use a nonionic in conjunction with the esterified copolymer, and that the concentration of the emulsifier system can vary between wide ranges while still leading to the desired effect.

### Example 3 and Comparative Examples C and D

An emulsion containing 50%w/w of 2,4,4-trimethylpentyl-2-peroxyneodecanoate and 3%w/w of an emulsifier system (see table), the remainder being a mixture of water/methanol with a freezing point of -20°C, was used in the polymerization of VCM in a 1I. stainless steel Büchi autoclave with 3-bladed stirrer, baffle, and temperature sensor. The polymerization recipe was as follows:

| | |
|---|---|
| VCM | 260 g |
| H₂O | 520 g |
| KP-08 (PVA) | 0.39 g |
| Peroxyester emulsion | 0.26 g (0.05 %w/w of pure peroxide on VCM) |
| Na₂HPO₄ | 0.1 g |
| NaH₂PO₄ | 0.1 g |

The PVA was dissolved in the water and the phosphate buffer was added. The reactor was evacuated and flushed with N₂ four times (at room temperature). While stirring at 735 rpm, VCM was added. Subsequently, the reactor was heated to 53.5°C in 25 minutes. Then the initiator emulsion was added by injection through a septum. The polymerization was stopped after 480 minutes by venting off unreacted VCM and cooling. The PVC that was formed was filtered, washed with H₂O, and dried overnight at 30°C in an air oven and analyzed. The fish-eye number of the resulting PVC was measured as described by O. Leachs in *Kunststoffe*, Vol. 50(4), 1960, pp 227-234.

| Example | 3 | C | D |
|---|---|---|---|
| Dapral GE202 (%w/w) | 2.5 | 0 | 3.0 |
| Berol 08 (%w/w) | 0.5 | 3.0 | 0 |
| Fish eyes (dm⁻²) | 10 | 20 | 1300 |

This shows that the emulsions of the invention result in PVC with very low fish-eye numbers.

### Examples 4 and 5 and Comparative Examples E-J

Emulsions were prepared containing:
- 50.0% by weight (%w/w) of tert-butyl peroxyneodecanoate,
- 2.5%w/w of Dapral GE 202,
- 0.5%w/w of a nonionic surfactant (see table), and
- the balance being a mixture of water/methanol with a freezing point of -20°C.

| Example | 4 | 5 | E | F | G | H | I | J |
|---|---|---|---|---|---|---|---|---|
| Surfactant | EFO H1 | EFO H2 | EFO H3 | EFO H4 | EFO H5 | ESM | ECG | EFA |
| HLB value | 16.0 | 17.2 | 11.5 | 13.5 | 15.4 | 16.7 | 18.0 | 18.0 |
| Viscosity (mPa.s) | 50 | 55 | 60 | 60 | 60 | 55 | 55 | 60 |
| d50 (%w/w) | 1.2 | 1.3 | 1.0 | 0.8 | 1.2 | 1.4 | 0.9 | 1.1 |
| d99 (%w/w) | 12.2 | 5.5 | 3.9 | 4.5 | 5.2 | 3.6 | 2.9 | 4.5 |
| Safety | + | + | - | - | - | - | - | - |
| EFOH 1 = Remcopal® 20 ex CECA = ethoxylated fatty alcohol EFOH 2 = Ethylan® CO 35 ex Akcros = ethoxylated fatty alcohol EFOH 3 = Berol® 087 ex Akzo Nobel = ethoxylated fatty alcohol EFOH 4 = Berol® 185 ex Akzo Nobel = ethoxylated fatty alcohol EFOH 5 = Ethylan® R ex Akcros = ethoxylated fatty alcohol ESM = Tween@ 20 ex ICI = ethoxylated sorbitan monolaurate ECG = Softigen® 767 ex Hüls = ethoxylated capril/caprilic glyceride EFA = Cithrol® 10 ML ex Croda = ethoxylated fatty acid | | | | | | | | |

These results show that the emulsifier system according to the invention must contain an ethoxylated fatty alcohol of the appropriate HLB-value.

### Examples 6 and 7 and Comparative Examples K and L

Emulsions were prepared containing:
- 50.0% by weight (%w/w) of 2,4,4-trimethylpentyl-2-peroxyneodecanoate,
- 2.7%w/w of Dapral GE 202 in Examples 6 and 7 and 3.0%w/w in Examples K and L,
- 0.3%w/w of Berol 08 in Examples 6 and 7 and none in Examples K and L, and
- the balance being a mixture of water and anti-freeze agent according to the table with a freezing point of -20°C.

| Example | 6 | 7 | K | L |
|---|---|---|---|---|
| Anti-freeze agent | Methanol | ethanol | Methanol | ethanol |
| d50 | 1.6 | 0.6 | 1.3 | 39.9 |
| d99 | 3.0 | 1.5 | 3.3 | 110.6 |
| Safety | + | + | - | n.r. |
| Viscosity | 80 | 151 | n.r. | n.r. |
| n.r. = not relevant | | | | |

These results show the higher tolerance of the emulsions according to the invention in respect of the anti-freeze agent that can be used.

### Examples 8, 9 and 10

For Examples 8 and 9 emulsions were prepared containing:
- 50.0% by weight (%w/w) of bis(2-ethylhexyl) peroxydicarbonate,
- 2.0%w/w of Dapral GE 202,
- 0.5%w/w of Berol 08, and
- the balance being a mixture of water and anti-freeze agent according to the table with a freezing point of -20°C.

In Example 8 ethylene glycol was used as the anti-freeze agent, whereas in Example 9 propylene glycol was used. Both emulsions were acceptable from a safety and use point of view.
In Example 10, Example 1 was repeated, except that ethanol was substituted for the methanol. Also this emulsion was acceptable from a safety and use point of view.

### Comparative Examples M-P

Emulsions were prepared containing:
- 50.0% by weight (%w/w) of 2,4,4-trimethylpentyl-2-peroxyneodecanoate,
- 3%w/w of an emulsifier system, optionally containing Berol 08, but comprising Unitika UMR10M, a PVA, instead of the esterified copolymer, and
- the balance being a mixture of waterand anti-freeze agent according to the table with a freezing point of -20°C.

The following results were obtained.

| Example | M | N | O | P |
|---|---|---|---|---|
| Unitika UMR10M (%w/w) | 3 | 2 | 1 | 0 |
| Berol 08 (%w/w) | 0 | 1 | 2 | 3 |
| Viscosity (mPa.s) | 440 | 430 | 330 | 330 |

Handling of these emulsions was troublesome due to the high viscosity, especially when compared to the emulsion of Example 6 above.

### Comparative Example Q

An emulsion was made containing 50%w/w of α-cumyl peroxyneodecanoate, 1%w/w Unitika UMR10M (PVA) ex Unitica and 1%w/w Alcotex 552P (PVA) ex Harco and 0.15%w/w Berol 08. The viscosity of the resulting emulsion was about 950 mPa.s and unacceptable.

## Claims

1. Aqueous peroxide emulsion, optionally containing anti-freeze and/or further additives, which contains a specific emulsifier system comprising a copolymer of an α,β-unsaturated dicarboxylic acid and a C₈₋₂₄ α-olefin the acid groups of which are esterified with an ethoxylated alcohol having a degree of ethoxylation of 1-45, **characterized in that** the emulsifier system further comprises an ethoxylated fatty alcohol with an HLB-value greater than 16.

2. Emulsion according to claim 1 wherein the emulsifier system consists essentially of the copolymer of an α,β-unsaturated dicarboxylic acid and a C₈₋₂₄ α-olefin the acid groups of which are esterified with an ethoxylated alcohol having a degree of ethoxylation of 1-45 and the ethoxylated fatty alcohol.

3. Emulsion according to claim 1 or 2 wherein the peroxide is selected from the group consisting of peroxyesters, peroxydicarbonates, peroxycarbonates, diacyl peroxides, peroxides, and combinations thereof, and in which said peroxide is present in an amount of 30-70% by weight, based on the weight of the emulsion.

4. Emulsion according to claim 3 comprising one or more peroxides which require refrigerated storage and are present in an amount of 40-65% by weight, preferably 50-65% by weight, based on the weight of the emulsion.

5. Emulsion according to claim 4 further comprising an anti-freeze selected from the group consisting of methanol, ethanol, isopropanol, ethylene glycol, propylene glycol, and glycerol.

6. Emulsion according to any one of the preceding claims wherein the copolymer is present in an amount of 0.05 to 20% by weight and the ethoxylated fatty alcohol is present in an amount of 0.02-15% by weight, while the total weight of both compounds is at least 0.5% by weight, all based on the weight of the peroxide in said emulsion.

7. Emulsion according to claim 6 wherein the copolymer is present in an amount of 0.1-15% by weight, preferably 0.2-10% by weight, based on the weight of the peroxide.

8. Emulsion according to any one of the preceding claims wherein the HLB value of the ethoxylated fatty alcohol is greater than 16.5, preferably greater than 17.0.

9. Emulsion according to any one of the preceding claims wherein the droplet size of the emulsion, when measured using a Malvern Easy Sizer, is **characterized by** a d50 of 0.1-2.0 µm and a d99 of 0.5-9.0 µm.

10. Emulsion according to any one of the preceding claims with a viscosity of 10-300 mPa.s.

11. Use of an emulsion according to any one of the preceding claims in a polymerization or polymer modification reaction, preferably a reaction involving the polymerization of at least vinyl chloride.

12. Polyvinyl chloride obtainable by a process involving the reaction of at least vinyl chloride monomer and a peroxide that was used in the form of an emulsion according to any one of claims 1-10.

## Patentansprüche

1. Wässrige Peroxid-Emulsion, gegebenenfalls ein Frostschutzmittel und/oder weitere Additive enthaltend, die ein spezielles Emulgatorsystem enthält, das ein Copolymer einer α,β-ungesättigten Dicarbonsäure und eines C₈₋₂₄-α-Olefins umfasst, deren Säuregruppen mit einem ethoxylierten Alkohol verestert sind, der einen Ethoxylierungsgrad von 1 bis 45 hat, **dadurch gekennzeichnet, dass** das Emulgatorsystem weiterhin einen ethoxylierten Fettalkohol mit einem HLB-Wert von größer als 16 umfasst.

2. Emulsion gemäß Anspruch 1, wobei das Emulgatorsystem im Wesentlichen aus dem Copolymer einer α,β-ungesättigten Dicarbonsäure und eines C₈₋₂₄-α-Olefins besteht, deren Säuregruppen mit einem ethoxylierten Alkohol, der einen Ethoxylierungsgrad von 1 bis 45 hat, und dem ethoxylierten Fettalkohol verestert sind.

3. Emulsion gemäß den Ansprüchen 1 oder 2, wobei das Peroxid aus der Gruppe ausgewählt ist, bestehend aus Peroxyestern, Peroxydicarbonaten, Peroxycarbonaten, Diacylperoxiden, Peroxiden und Kombinationen derselben, und wobei das Peroxid in einer Menge von 30 Gew.-% bis 70 Gew.-%, bezogen auf das Gewicht der Emulsion, vorliegt.

4. Emulsion gemäß Anspruch 3, umfassend ein oder mehrere Peroxide, die unter Kühlung gelagert werden müssen und in einer Menge von 40 Gew.-% bis 65 Gew.-%, vorzugsweise 50 Gew.-% bis 65 Gew.-%, bezogen auf das Gewicht der Emulsion, vorliegen.

5. Emulsion gemäß Anspruch 4, die weiterhin ein Frostschutzmittel umfasst, das aus der Gruppe ausgewählt ist, bestehend aus Methanol, Ethanol, Isopropanol, Ethylenglycol, Propylenglycol und Glycerin.

6. Emulsion gemäß irgendeinem der vorhergehenden Ansprüche, wobei das Copolymer in einer Menge von 0,05 Gew.-% bis 20 Gew.-% vorliegt, und der ethoxylierte Fettalkohol in einer Menge von 0,02 Gew.-% bis 15 Gew.-% vorliegt, während das Gesamtgewicht beider Verbindungen wenigstens 0,5 Gew.-% beträgt, wobei alle auf das Gewicht des Peroxids in der Emulsion bezogen sind.

7. Emulsion gemäß Anspruch 6, wobei das Copolymer in einer Menge von 0,1 Gew.-% bis 15 Gew.-%, vorzugsweise von 0,2 Gew.-% bis 10 Gew.-%, bezogen auf das Gewicht des Peroxids, vorliegt.

8. Emulsion gemäß irgendeinem der vorhergehenden Ansprüche, wobei der HLB-Wert des ethoxylierten Fettalkohols größer als 16,5, vorzugsweise größer als 17,0 ist.

9. Emulsion gemäß irgendeinem der vorhergehenden Ansprüche, wobei die Tröpfchengröße der Emulsion, wenn sie unter Verwendung eines Malvern Easy Sizer gemessen wird, durch ein d50 von 0,1 µm bis 2,0 µm und ein d99 von 0,5 µm bis 9,0 µm gekennzeichnet ist.

10. Emulsion gemäß irgendeinem der vorhergehenden Ansprüche mit einer Viskosität von 10 mPa·s bis 300 mPa·s.

11. Verwendung einer Emulsion gemäß irgendeinem der vorhergehenden Ansprüche in einer Polymerisations- oder Polymermodifizierungsreaktion, vorzugsweise einer Reaktion, in welche die Polymerisation von wenigstens Vinylchlorid verwickelt ist.

12. Polyvinylchlorid, das durch ein Verfahren erhältlich ist, umfassend die Umsetzung von wenigstens Vinylchlorid-Monomer und eines Peroxids, das in Form einer Emulsion gemäß irgendeinem der Ansprüche 1 bis 10 verwendet wurde.

## Revendications

1. Emulsion aqueuse de peroxyde, contenant éventuellement un anti-gel et/ou d'autres additifs, qui contient un système émulsifiant spécifique comprenant un copolymère d'un acide dicarboxylique insaturé en α, β et d'une α-oléfine en C₈ à C₂₄ dont les groupes acides sont estérifiés avec un alcool éthoxylé ayant un degré d'éthoxylation de 1 à 45, **caractérisé en ce que** le système émulsifiant comprend en outre un alcool gras éthoxylé avec une valeur de HLB supérieure à 16.

2. Emulsion selon la revendication 1, dans laquelle le système émulsifiant est constitué essentiellement du copolymère d'un acide dicarboxylique insaturé en α, β et d'une α-oléfine en C₈ à C₂₄ dont les groupes acides sont estérifiés avec un alcool éthoxylé ayant un degré d'éthoxylation de 1 à 45 et l'alcool gras éthoxylé.

3. Emulsion selon la revendication 1 ou 2, dans laquelle le peroxyde est choisi dans le groupe comprenant des peroxyesters, des peroxydicarbonates, des peroxycarbonates, des diacyl peroxydes, des peroxydes, et de leurs combinaisons, et dans laquelle ledit peroxyde est présent en une quantité de 30 à 70 % en poids, basé sur le poids de l'émulsion.

4. Emulsion selon la revendication 3, comprenant un ou plusieurs peroxydes qui nécessitent un stockage réfrigéré et sont présents en une quantité de 40 à 65 % en poids, de préférence de 50 à 65 % en poids, basé sur le poids de l'émulsion.

5. Emulsion selon la revendication 4, comprenant en outre un anti-gel choisi dans le groupe comprenant le méthanol, l'éthanol, l'isopropanol, l'éthylèneglycol, le propylèneglycol, et le glycérol.

6. Emulsion selon l'une quelconque des revendications précédentes, dans laquelle le copolymère est présent en une quantité de 0,05 à 20 % en poids et l'alcool gras éthoxylé est présent en une quantité de 0,02 à 15 % en poids, alors que le poids total des deux composés est d'au moins 0,5 % en poids, tous basés sur le poids du peroxyde dans ladite émulsion.

7. Emulsion selon la revendication 6, dans laquelle le copolymère est présent en une quantité de 0,1 à 15 % en poids, de préférence de 0,2 à 10 % en poids, basé sur le poids du peroxyde.

8. Emulsion selon l'une quelconque des revendications précédentes, dans laquelle la valeur de HLB de l'alcool gras éthoxylé est supérieure à 16,5, de préférence supérieure à 17,0.

9. Emulsion selon l'une quelconque des revendications précédentes, dans laquelle la taille de gouttelette de l'émulsion, quand elle est mesurée en utilisant un Malvern Easy Sizer, est **caractérisée par** une d50 de 0,1 à 2,0 µm et une d99 de 0,5 à 9,0 µm.

10. Emulsion selon l'une quelconque des revendications précédentes avec une viscosité de 10 à 300 mPa.s.

11. Utilisation d'une émulsion selon l'une quelconque des revendications précédentes dans une réaction de polymérisation ou de modification de polymère, de préférence une réaction impliquant la polymérisation d'au moins le chlorure de vinyle.

12. Chlorure de polyvinyle que l'on peut obtenir par un processus impliquant la réaction d'au moins le monomère chlorure de vinyle et d'un peroxyde qui a été utilisé sous la forme d'une émulsion selon l'une quelconque des revendications 1 à 10.
